**Europäisches Patentamt**

**European Patent Office**

**Office européen des brevets**

(11) Numéro de publication : **0 345 183 B1**

# (12) FASCICULE DE BREVET EUROPEEN

(45) Date de publication du fascicule du brevet :
**05.08.92 Bulletin 92/32**

(51) Int. Cl.⁵ : **A01D 78/12, A01D 78/10**

(21) Numéro de dépôt : **89440035.7**

(22) Date de dépôt : **27.04.89**

---

(54) **Machine de fenaison comportant un rotor pour andaîner.**

---

(30) Priorité : **03.06.88 FR 8807598**

(43) Date de publication de la demande :
**06.12.89 Bulletin 89/49**

(45) Mention de la délivrance du brevet :
**05.08.92 Bulletin 92/32**

(84) Etats contractants désignés :
**AT DE ES FR IT NL**

(56) Documents cités :
**EP-A- 0 318 407
DE-A- 2 059 269
DE-A- 2 833 814
DE-A- 3 628 604
FR-A- 1 374 202**

(56) Documents cités :
**FR-A- 1 566 084
FR-A- 2 093 488
FR-A- 2 127 029
FR-A- 2 358 820
FR-A- 2 415 955**

(73) Titulaire : **KUHN S.A.
4, Impasse des Fabriques
F-67700 Saverne (FR)**

(72) Inventeur : **Aron, Jérôme M.
12, rue de la Forêt
Dossenheim-Sur-Zinsel F-67330 Bouxwiller
(FR)**

(74) Mandataire : **Andres, Jean-Claude
KUHN S.A. 4, Impasse des Fabriques
F-67700 Saverne (FR)**

**Description**

La présente invention se rapporte à une machine de fenaison comportant un rotor entraîné en rotation et muni d'outils de travail pour andainer des végétaux se trouvant sur le sol, lequel rotor est relié à une poutre ou un support analogue muni d'un dispositif d'accouplement trois points pour l'accrochage à un tracteur d'entraînement et, comporte un axe support central portant une came de commande pour lesdits outils, cet axe étant relié à un bâti avec des roulettes supports qui se déplacent sur le sol dans la position de travail et qui sont disposées de telle sorte que leurs axes de rotation se situent sensiblement dans deux plans verticaux qui sont décalés l'un par rapport à l'autre dans la direction de déplacement, la liaison entre le rotor et la poutre comprenant un axe d'articulation sensiblement horizontal et sensiblement perpendiculaire à ladite poutre et qui se situe entre les deux plans verticaux précités.

Sur une machine de ce genre, connue dans la demande de brevet DE-A-28 33 814, le rotor est articulé par rapport à la poutre support à travers deux articulations prévues l'une au-dessus de l'autre. L'une de ces articulations comporte des axes de pivotement horizontaux qui sont liés au rotor, tandis que l'autre articulation comporte un axe de pivotement vertical lié à la poutre support. Ces articulations doivent permettre au rotor de suivre les dénivellations du sol et de s'adapter aux courbes de la trajectoire sur laquelle est déplacée la machine.

Cette possibilité de s'adapter aux courbes de la trajectoire est cependant très limitée. Le rotor de la machine ne peut en effet se déplacer que d'un angle de faible valeur autour de l'axe de pivotement vertical si on veut lui assurer un entraînement en rotation correct à partir du tracteur. Cette machine n'est donc pas capable d'assurer un bon andainage dans toutes les conditions.

La présente invention a notamment pour but de proposer une machine de fenaison avec un rotor d'andainage pouvant suivre les dénivellations du sol et pouvant s'adapter à toutes les courbes de la trajectoire suvie.

A cet effet, une importante caractéristique de l'invention consiste en ce que le rotor comporte un couvercle qui est articulé sur la poutre support au moyen de l'axe d'articulation sensiblement horizontal et sensiblement perpendiculaire à ladite poutre, que l'axe support central du rotor est logé libre en rotation dans un alésage du couvercle de manière à pouvoir tourner durant le travail par rapport audit axe d'articulation, ensemble avec la came de commande et le bâti avec les roulettes, que les roulettes dont les axes de rotation se situent dans le plan le plus en avant sont pivotantes autour d'axes sensiblement verticaux et que la roulette dont l'axe de rotation se situe dans le plan le plus en arrière est fixe par rapport au bâti et est décalée par rapport à l'axe support central.

Cet agencement permet au rotor de bien suivre les dénivellations du sol et de toujours garder la zone de ramassage des outils de travail dans la partie la plus en avant de leur trajectoire et ce quelle que soit la direction de déplacement. Dans ce cas la position des organes d'entraînement du rotor demeure inchangée. Le fourrage est ainsi correctement ramassé et andainé dans toutes les courbes que doit suivre le rotor de la machine.

En sus, des roulettes sont constamment près de la zone de ramassage afin de permettre aux outils de bien suivre les dénivellations du sol. Cela est également possible dans les courbes et les virages grâce à la possibilité qu'a le rotor de pivoter autour de l'axe d'articulation avec la poutre dans n'importe quelle position.

D'autres caractéristiques et avantages de l'invention ressortiront des revendications et de la description ci-après d'un exemple de réalisation non limitatif de l'invention, avec référence aux dessins annexés dans lesquels :

– la figure 1 représente une vue de dessus d'une machine selon l'invention,

– la figure 2 représente, à plus grande échelle, une coupe à travers le rotor de la machine,

– la figure 3 représente une vue analogue à celle de la figure 1, d'une machine dans un virage.

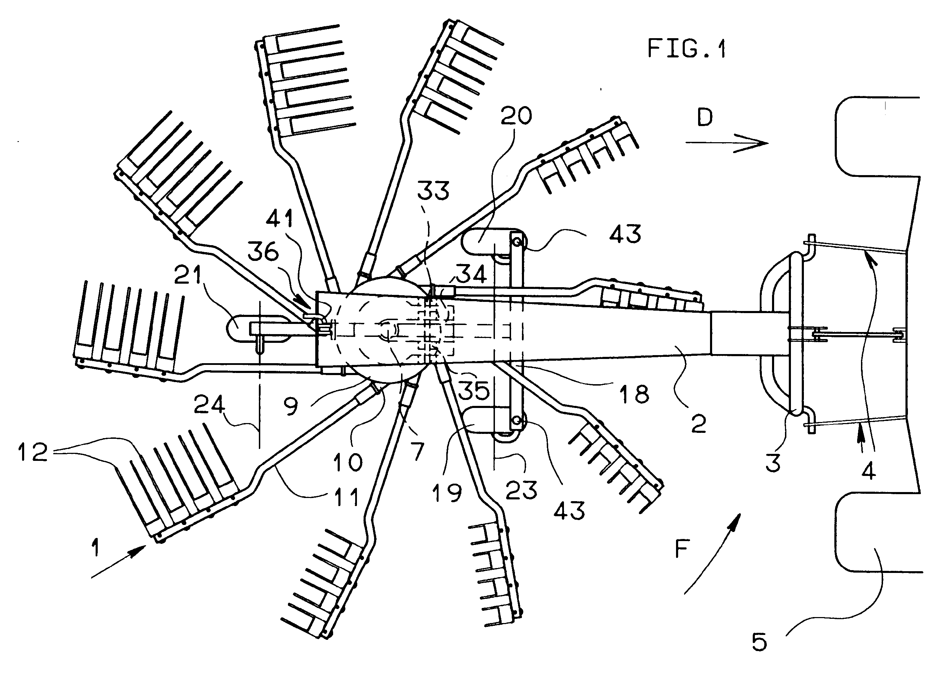

Telle qu'elle est représentée sur les figures 1 à 3, la machine comporte un rotor d'andainage (1). Ce rotor (1) est relié à une poutre (2) ou à un support similaire qui s'étend plus ou moins horizontalement. Cette poutre (2) est munie d'un dispositif d'accouplement trois points (3) pour l'accrochage aux bielles de relevage (4) d'un tracteur (5).

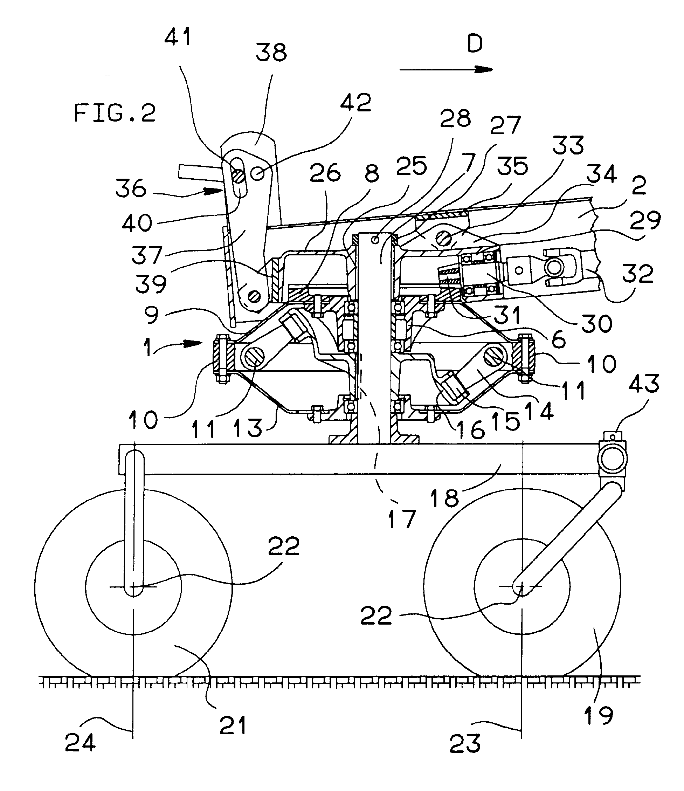

Comme celà ressort notamment de la figure 2, ledit rotor (1) se compose d'un moyeu (6) monté libre en rotation sur un axe support (7) sensiblement vertical. Ce moyeu (6) porte une couronne dentée (8) et un support (9) sur lequel sont fixés des paliers (10) traversés par des bras (11) munis d'outils de travail (12) en forme de fourches. Un deuxième support (13) est prévu sur le côté opposé des paliers (10) afin d'améliorer leur tenue.

Dans l'exemple représenté sur les figures annexées le rotor (1) possède dix bras porte-outils (11). A l'intérieur du volume délimité par les deux supports (9 et 13), chaque bras (11) possède un levier (14) avec un galet (15) qui se situe dans une came de commande (16). Celle-ci est liée à l'axe support (7) au moyen d'une clavette (17). Cet axe (7) est lui-même porté par un bâti (18) en forme de T, muni de trois roulettes supports (19, 20, 21) qui se déplacent sur le sol durant le travail. Ces roulettes (19, 20, 21) sont disposées sous le rotor (1) de telle sorte que leurs axes de rotation (22) se situent sensiblement dans deux plans verticaux (23 et 24) qui sont décalés l'un par rapport à l'autre dans la direction de déplacement indiquée par le flèche D. Ces deux plans (23, 24) sont sensiblement perpendiculaires à la direction de déplacement D et se situent l'un à l'avant et l'autre à l'arrière de l'axe support (7). Les trois roulettes (19, 20, 21) sont disposées en forme de triangle et se situent au voisinage de la trajectoire des outils de travail (12).

L'axe support (7) traverse aussi un alésage (25) d'un couvercle (26) disposé au-dessus du moyeu (6) et de la couronne (8) précités. A son extrémité supérieure est prévue une bague d'arrêt (27) immobilisée au moyen d'une goupille (28). Ledit couvercle (26) comporte un second alésage (29) dans lequel est guidé un arbre d'entraînement (30). Celui-ci possède un pignon (31) qui engrène avec la couronne (8) du moyeu (6). L'autre extrémité de cet arbre (30) est reliée à un arbre de transmission (32) qui est en liaison, d'une manière connue en soi, avec l'arbre de prise de force du tracteur (5).

La liaison entre le rotor (1) et la poutre (2) est assurée au moyen d'un axe d'articulation (33) sensiblement horizontal. Cet axe (33) se situe de préférence entre les deux plans verticaux (23 et 24) contenant les axes de rotation (22) des roulettes (19, 20, 21). Il peut être prévu légèrement à l'avant de l'axe support (7).

En vue de cette liaison, le couvercle (26) est pourvu de deux oreilles (34) munies de trous de passage pour l'axe (33). La poutre (2) comporte également des pattes de fixation (35) avec des trous de passage pour ledit axe (33). On voit sur la figure 1 que les oreilles (34) sont disposées avec un faible jeu latéral entre deux pattes (35). On obtient ainsi d'une manière simple mais précise le positionnement latéral du rotor (1) par rapport à la poutre (2).

La poutre (2) est au moins partiellement ouverte vers le bas et recouvre la partie supérieure du rotor (1) et l'axe d'articulation (33). Elle assure ainsi une protection efficace de ces pièces. On voit également sur la figure 1, que l'axe d'articulation (33) est perpendiculaire à la poutre (2) de la machine. Le rotor (1) peut ainsi pivoter par rapport à ladite poutre (2) pour bien suivre les dénivellations du sol.

Les pivotements du rotor (1) autour de l'axe d'articulation (33) sont limités à l'aide d'un dispositif (36). La valeur de l'angle de pivotement entre les deux positions extrêmes du rotor peut être de l'ordre de 12°. Cette valeur est suffisante pour l'adaptation du rotor (1) aux dénivellations qu'il peut rencontrer sur un terrain entretenu normalement. Cette valeur peut néanmoins être augmentée ou diminuée selon le cas.

Ledit dispositif (36) est prévu à l'arrière de l'axe support (7). Il se compose d'une languette (37) solidaire du couvercle (26) du rotor (1) et de deux pattes (38) solidaires de la poutre (2). La languette (37) se situe entre les pattes (38) et est reliée au couvercle (26) du rotor (1) au moyen d'une chape (39). Elle possède un trou oblong (40) dans lequel passe un axe (41) logé par ailleurs dans des trous circulaires des deux pattes (38). Grace au trou oblong (40) la languette (37) peut se déplacer avec le rotor (1) par rapport aux pattes (38). La longueur de ce trou (40) détermine l'angle de pivotement du rotor (1). Le dispositif (36) permet aussi de bloquer le rotor (1) par rapport à la poutre (2). Un tel blocage est utile au transport, afin d'éviter des balancements du rotor (1) autour de l'axe d'articulation (33) lorsque la machine est portée par le tracteur (5). A cet effet, la languette (37) comporte un trou cylindrique (42) dans lequel peut être engagé l'axe (41) après avoir aligné ce trou (42) avec ceux prévus dans les pattes (38).

On voit également sur la figure 2 que l'axe support (7) traverse avec un léger jeu radial l'alésage (25) du couvercle (26) du rotor (1). Cet axe (7), la came de commande (16) qui est fixée sur ledit axe et le bâti (18) des roulettes (19, 20, 21) forment un ensemble libre en rotation par rapport à l'axe d'articulation (33).

Par ailleurs, les deux roulettes avant (19, 20) sont pivotantes par rapport au bâti (18) autour d'axes (43) sensiblement verticaux, alors que la roulette arrière (21) est fixe par rapport au bâti (18). En raison de son décalage par rapport à l'axe support (7), elle se place constamment derrière ledit axe (7) quelle que soit la direction de déplacement de la machine. Cette roulette (21) assure ainsi le positionnement de l'ensemble libre en rotation constitué par l'axe support (7), la came de commande (16) et le bâti (18) en fonction de la direction de déplacement.

Durant le travail, la machine est déplacée dans la direction D (figure 1) et le rotor (1) est entraîné en rotation à partir du tracteur (5) dans le sens de la flèche F. Les galets (15) des bras porte-outils (11) se déplacent alors dans la came de commande (16). Le chemin de roulement desdits galets (15) dans la came (16) est tel que, sur la partie avant de leur trajectoire - vu dans la direction de déplacement D - les outils (12) sont dirigés vers le bas et ramassent les végétaux couchés sur le sol et que, sur la partie latérale de leur trajectoire, ils se lèvent et déposent les végétaux sous la forme d'un andain. Les roulettes supports (19, 20, 21) suivent les dénivellations du sol et guident le rotor (1). Celui-ci se déplace alors par rapport à la poutre (2) parallèlement à la direction de déplacement D autour de l'axe d'articulation (33) de sorte que ses outils (12) effleurent constamment la surface du sol.

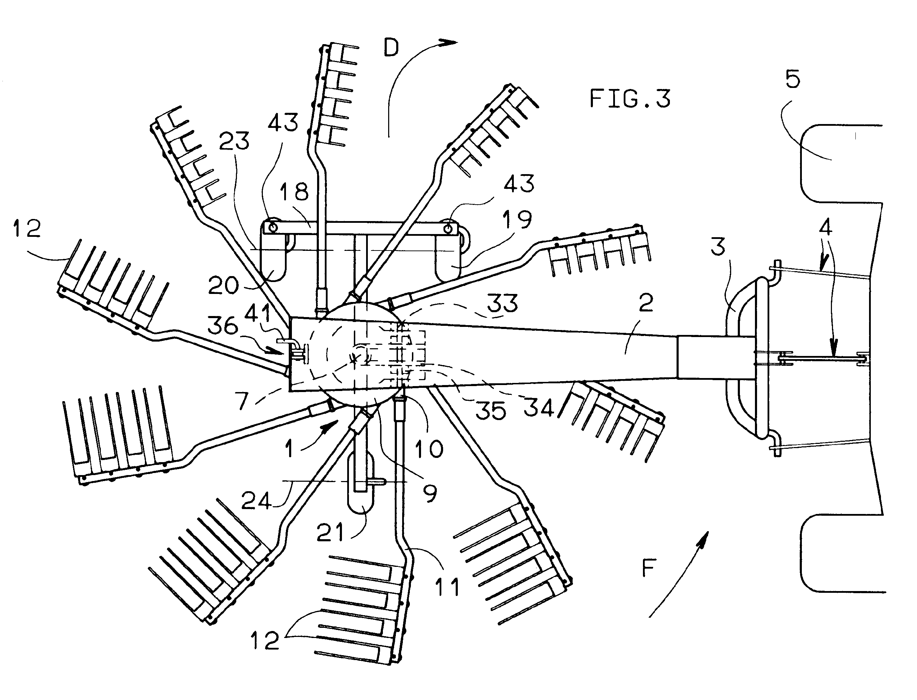

En sus, l'axe support (7), la came de commande (16) et les roulettes (19, 20, 21) s'orientent automatiquement de telle sorte que la zone sur laquelle les outils (12) ramassent les végétaux couchés sur le sol se situe dans la partie la plus en avant de leur trajectoire, même dans les courbes et les virages. Comme celà est représenté sur la figure 3, les deux roulettes (19, 20) restent toujours à proximité de la zone de ramassage. Elles font suivre aux outils (12) les dénivellations du sol en faisant pivoter le rotor transversalement à la direction de déplacement D vu que l'axe d'articulation (33) est alors plus ou moins dirigé dans cette direction D.

Il est bien évident que l'invention n'est pas limitée au mode de réalisation tel que décrit ci-dessus et représenté sur les dessins annexés. Des modifications restent possibles, notamment du point de vue de la constitution des divers éléments ou par substitution d'équivalents techniques sans pour autant sortir du domaine de protection tel que défini dans les revendications.

## Revendications

1. Machine de fenaison comportant un rotor (1) entraîné en rotation et muni d'outils (12) pour andainer des végétaux se trouvant sur le sol, lequel rotor (1) est relié à une poutre (2) ou un support analogue muni d'un dispositif d'accouplement trois points (3) pour l'accrochage à un tracteur d'entraînement et, comporte un axe support central (7) portant une came de commande (16) pour lesdits outils (12), cet axe (7) étant relié à un bâti (18) avec des roulettes supports (19, 20, 21) qui se déplacent sur le sol dans la position de travail et qui sont disposées de telle sorte que leurs axes de rotation (22) se situent sensiblement dans deux plans verticaux (23,24) qui sont décalés l'un par rapport à l'autre dans la direction de déplacement (D), la liaison entre le rotor (1) et la poutre (2) comprenant un axe d'articulation (33) sensiblement horizontal et sensiblement perpendiculaire à ladite poutre et qui se situe entre les deux plans verticaux (23,24) précités, caractérisée par le fait que le rotor (1) comporte un couvercle (26) qui est articulé sur la poutre (2) au moyen de l'axe d'articulation (33) sensiblement horizontal et sensiblement perpendiculaire à ladite poutre, que l'axe support central (7) du rotor (1) est logé libre en rotation dans un alésage (25) du couvercle (26), de manière à pouvoir tourner durant le travail par rapport audit axe d'articulation (33), ensemble avec la came de commande (16), le bâti (18) et les roulettes (19, 20, 21), que les roulettes (19, 20) dont les axes de rotation (22) se situent dans le plan (23) le plus en avant sont pivotantes autour d'axes (43) sensiblement verticaux et, que la roulette (21) dont l'axe de rotation (22) se situe dans le plan (24) le plus en arrière, est fixe par rapport au bâti (18) et est décalée par rapport à l'axe support (7).

2. Machine selon la revendication 1, caractérisée par le fait que le couvercle (26) est muni de deux oreilles (34) à travers lesquelles passe l'axe d'articulation (33).

3. Machine selon la revendication 2, caractérisée par le fait que les oreilles (34) sont disposées avec un faible jeu latéral entre deux pattes de fixation (35) solidaires de la poutre (2).

4. Machine selon l'une quelconque des revendications précédentes, caractérisée par le fait que l'axe d'articulation (33) est situé à l'intérieur de la poutre (2).

5. Machine selon l'une quelconque des revendications précédentes, caractérisée par le fait qu'elle comporte un dispositif (36) pour limiter les pivotements du rotor (1) autour de l'axe d'articulation (33).

6. Machine selon la revendication 5, caractérisée par le fait que le rotor (1) comporte une languette (37) munie d'un trou oblong (40) à travers lequel passe un axe (41) lié à des pattes (38) solidaires de la poutre (2).

7. Machine selon la revendication 5 ou 6, caractérisée par le fait que l'angle de pivotement du rotor (1) autour de l'axe d'articulation (33) est d'environ 12°.

8. Machine selon la revendication 5 ou 6, caractérisée par le fait que le rotor (1) peut être bloqué par rapport à la poutre (2).

9. Machine selon la revendication 8, caractérisée par le fait que la languette (37) du rotor (1) comporte un trou cylindrique (42) dans lequel peut être introduit l'axe (41) lié aux pattes (38) solidaires de la poutre (2).

## Claims

1. Haymaking machine comprising a rotor (1) driven in rotation and provided with tools (12) for the swathing of plants lying on the ground, said rotor (1) is linked to a beam (2) or a similar support provided with a three-point coupling device (3) for the coupling to a driving tractor and comprises a central support axis (7) carrying a driving cam (16) for said tools (12), this axis (7) being linked to a frame (18) with support wheels (19, 20, 21) which move on the ground in the work position and which are arranged so that their axes of rotation (22) are substantially located in two vertical planes (23, 24) which are shifted one with regard to the other in the direction of displacement (D), the bonding between the rotor (1) and the beam (2) comprising an axis of articulation (33) substantially horizontal and substantially perpendicular to said beam and which is located between the two above mentioned vertical planes (23, 24), characterized in that the rotor (1) comprises a cover (26) which is articulated on the beam (2) by means of the axis of articulation (33) substantially horizontal and substantially perpendicular to said beam, that the central support axis (7) of the rotor (1) is lodged free in rotation in a boring (25) of the cover (26), so as to be able to rotate during the work with regard to said axis of articulation (33), together with the driving cam (16), the frame (18) and the wheels (19, 20, 21), that the wheels (19, 20) the rotation axes (22) of which are located in the most forward plane (23) are pivoting around substantially vertical axes (43) and that the wheel (21) the rotation axis (22) of which is located in the most backward plane (24) is immovable with regard to the frame (18) and is shifted with regard to the support axis (7).

2. Machine according to claim 1, characterized in that the cover (26) is provided with two wings (34) through which passes the axis of articulation (33).

3. Machine according to Claim 2, characterized in that the wings (34) are arranged with a slight lateral play between two fastening cramps (35) solid with the beam (2).

4. Machine according to anyone of the preceding claims, characterized in that the axis of articulation (33) is located inside the beam (2).

5. Machine according to anyone of the preceding claims, characterized in that it comprises a device (36) to limit the pivoting of the rotor (1) around the axis of articulation (33).

6. Machine according to Claim 5, characterized in that the rotor (1) comprises a tongue (37) provided with an oblong hole (40) through which passes an axis (41) linked to legs (38) solid with the beam (2).

7. Machine according to Claim 5 or 6, characterized in that the pivoting angle of the rotor (1) around the axis of articulation (33) is about 12°.

8. Machine according to claim 5 or 6, characterized in that the rotor (1) can be locked with regard to the beam (2).

9. Machine according to claim 8, characterized in that the tongue (37) of the rotor (1) comprises a cylindrical hole (42) in which the axis (41) linked to the legs (38) solid with the beam (2) can be introduced.

**Patentansprüche**

1. Heuwerbungsmaschine, die einen drehbar angetriebenen Rotor (1), der mit Werkzeugen (12) zum Schwaden von sich auf dem Boden befindlichem Pflanzengut versehen ist aufweist, welcher Rotor (1) an einen Balken (2) oder einen ähnlichen Träger angeordnet ist, der mit einer Dreipunktkupplung (3) zum Anhängen an einen Antriebsschlepper versehen ist und eine zentrale Tragachse (7) aufweist mit einer Steuerkurve (16) für die Werkzeuge (12), wobei diese Achse (7) mit einem Gestell (18) mit Tragrädern (19, 20, 21), verbunden ist die sich in Arbeitsstellung auf dem Boden bewegen und die derart angeordnet sind, dass ihre Rotationsachsen (22) sich nahezu in zwei Vertikalebenen (23, 24) befinden, welche in der Fahrtrichtung (D) zueinander versetzt sind, wobei die Verbindung zwischen dem Rotor (1) und dem Balken (2) eine etwa horizontale und zu dem Balken etwa senkrechte Gelenkachse (33) aufweist, die sich zwischen den beiden obengenannten Vertikalebenen (23, 24) befindet, dadurch gekennzeichnet, dass der Rotor (1) einen Deckel (26) aufweist, welcher an dem Balken (2) mittels der etwa horizontalen und etwa senkrechten zu dem genannten Balken stehende Gelenkachse (33) angelenkt ist, dass die zentrale Tragachse (2) des Rotors (1) frei drehbar in einer Bohrung (25) des Deckels (26) gelagert ist, sodass sie während der Arbeit drehen kann im Verhältnis zu der Gelenkachse (33) zusammen mit der Steuerkurve (16), dem Gestell (18) und den Rädern (19, 20, 21), dass die Räder (19, 20) deren Rotationsachsen (22) sich in der vordersten Ebene (23) befinden um etwa vertikalenen Achsen (43) drehbar sind, und, dass das Rad (21) dessen Drehachse (22) sich in der hintersten Ebene (24) befindet im Verhältnis zu dem Gestell (18) feststeht und im Verhältnis zu der Tragachse (7) versetzt ist.

2. Maschine nach Anspruch 1, dadurch gekennzeichnet, dass der Deckel (26) mit zwei Ösen (34) versehen ist durch welche die Gelenkachse (33) ragt.

3. Maschine nach Anspruch 2, dadurch gekennzeichnet, dass die Ösen (34) mit einem geringen Seitenspiel zwischen zwei mit dem Balken (2) starr verbundenen Befestigungslappen (35) angeordnet sind.

4. Maschine nach irgend einem der vorhergehenden Ansprüche, dadurch gekennzeichnet, dass die Gelenkachse (33) sich im Inneren des Balkens (2) befindet.

5. Maschine nach irgend einem der vorhergehenden Ansprüche, dadurch gekennzeichnet, dass sie eine Vorrichtung (36) zur Einschränkung der Schwenkungen des Rotors (1) um die Gelenkachsen (33) aufweist.

6. Maschine nach Anspruch 5, dadurch gekennzeichnet, dass der Rotor (1) eine Lasche (37) aufweist, welche mit einem länglichen Loch (40) versehen ist, durch welches eine Achse (41) ragt, die mit fest an dem Balken (2) angebrachten Lappen (38) verbunden ist.

7. Maschine nach Anspruch 5 oder 6, dadurch gekennzeichnet, dass der Schwenkwinkel des Rotors (1) um die Gelenkachse (33) etwa 12° beträgt.

8. Maschine nach Anspruch 5 oder 6, dadurch gekennzeichnet, dass der Rotor (1) in Beziehung zu dem Balken (2) blockiert werden kann.

9. Maschine nach Anspruch 8, dadurch gekennzeichnet, dass die Lasche (37) des Rotors (1) ein rundes Loch (42) aufweist in welches die Achse (41), die mit den fest an dem Balken (2) angebrachten Lappen (38) verbunden ist, eingeführt werden kann.

FIG.1

EP 0 345 183 B1

FIG.2

FIG.3